(19) Europäisches Patentamt
European Patent Office
Office européen des brevets

(11) Publication number: 0 007 484 B1

(12) EUROPEAN PATENT SPECIFICATION

(45) Date of publication of patent specification: 12.01.83

(51) Int. Cl.³: C 08 G 18/28, C 08 G 18/08, C 08 G 18/65

(21) Application number: 79102268.4

(22) Date of filing: 04.07.79

# (54) Process for the preparation of a polyurethane from an organic polyisocyanate or polyisothiocyanate and three different active hydrogen atom containing compounds.

(30) Priority: 05.07.78 US 922148

(43) Date of publication of application: 06.02.80 Bulletin 80/3

(45) Publication of the grant of the patent: 12.01.83 Bulletin 83/2

(84) Designated Contracting States: BE CH DE FR GB IT NL SE

(56) References cited:
DE - A - 2 751 923
GB - A - 1 233 614
US - A - 3 684 770
US - A - 4 048 105
US - A - 4 049 636

(73) Proprietor: THE DOW CHEMICAL COMPANY
Dow Center 2030 Abbott Road Post Office Box 1967
Midland Michigan 48640 (US)

(72) Inventor: Turner, Robert Burton
328 Huckleberry
Lake Jackson Brazoria, Texas (US)
Inventor: Morgan, Jr, Roy Edward
327 Four Oaks Drive
Clute Brazoria, Texas (US)

(74) Representative: Weickmann, Heinrich, Dipl.-Ing. et al,
Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska
Möhlstrasse 22
D-8000 München 86 (DE)

EP 0 007 484 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for the preparation of a polyurethane from an organic polyisocyanate or polyisothiocyanate and three different active hydrogen atom containing compounds

The present invention concerns polyurethanes suitable for reaction injection molding (RIM). Such polyurethanes are being sought for use in various metal replacement applications so as to reduce weight. As the physical properties are improved, the applications available for replacement of automobile parts currently made of metal can be increased. Such polyurethane RIM applications are thoroughly discussed in a paper by R. M. Gerkin and F. E. Critchfield, titled "The Properties of High Modulus Rim Urethanes", presented at the September 26—30, 1977 meeting of the Society of Automotive Engineers and in a paper by W. W. Ludwico and R. P. Taylor titled "The Bayflex 110 Series-The New Generation of Rim Materials" presented at the same meeting.

It is desirable that polyurethanes employed in metal replacement applications have modulus values which do not differ widely at high and low temperatures. The Gerkin and Critchfield article revealed a ratio of the flexural modulus value measured at −23°C divided by the value measured at 70°C for unfilled formulations of between 5 and 7. The Ludwico and Taylor paper disclosed ratios of flexural modulus values on unfilled systems measured at −30°C and 65°C of 3.56.

Polyurethanes of the present invention have ratios of the flexural modulus values measured on unfilled systems at −20°F (−29°C) and 158°F (70°C) of less than 3, even less than 2. Such polyurethanes also have at least 3 thermal transition temperatures as measured by thermomechanical analysis between −100°C and the decomposition temperature of the polyurethane.

U.S. Patents 3,983,068 and 4,028,303 teach polyurethanes prepared by reacting three polyols with a polyisocyanate. One of the polyols must be an amine-initiated polyol having a hydroxyl equivalent weight from 50 to less than 250. A second polyol has a hydroxyl equivalent weight of at least 700 if it is a diol and at least 500 if it has a functionality from 3 to 8. A third polyol is a non-amine initiated polyol having a hydroxyl equivalent weight of less than 200. Further, US—A 4,048 105 teaches polyurethanes prepared by reacting three active hydrogen containing compounds, viz. a high-molecular-weight polyol, an aromatic polyamine chain extender and a short-chain diol/triol, with a polyisocyanate.

The present invention is directed to a polyurethane prepared by admixing and reacting three active hydrogen compounds with an organic polyisocyanate or polyisothiocyanate characterized in that one of the active hydrogen compounds has a reactivity with a polyisocyanate greater than the reactivity of either of the other two active hydrogen compounds, the solubility parameter of each active hydrogen compound being different from each other by a value greater than 0.49 when the number of active hydrogen equivalents of the second most reactive active hydrogen compound is greater than the number of active hydrogen equivalents of the most reactive active hydrogen compound, the polyurethane composition having a flexural modulus factor (−29°C/70°C) not greater than 3.4 and having at least three thermal transition temperatures between −100°C and the decomposition temperature of the polyurethane as determined by thermomechanical analysis.

The invention is also directed to a process for the preparation of a polyurethane by admixing and reacting three active hydrogen compounds with an organic polyisocyanate or polyisothiocyanate characterized in that one of the active hydrogen compounds has a reactivity with a polyisocyanate greater than the reactivity of either of the other two active hydrogen compounds, the solubility parameter of each active hydrogen compound being different from each other by a value greater than 0.49 when the number of active hydrogen equivalents of the second most reactive active hydrogen compound is greater than the number of active hydrogen equivalents of the most reactive active hydrogen compound, the polyurethane so prepared having a flexural modulus factor (−29°C/70°C) not greater than 3.4 and having at least three thermal transition temperatures between −100°C and the decomposition temperature of the polyurethane as determined by thermomechanical analysis.

Preferably, the reactivity of one of the active hydrogen compounds is greater than the reactivity of a second active hydrogen compound, and the reactivity of the second active hydrogen compound is greater than the reactivity of the third active hydrogen compound. It is desirable that the flexural modulus factor be as close to 1 as possible. Advantageously, the polyurethanes have a flexural modulus factor of less than 3, preferably less than 2.75, and most preferably less than 2.

The term polyurethane as employed herein means the polymeric reaction product of an active hydrogen containing compound with an isocyanate and/or isothiocyanate containing compound. The product may also contain other reaction products such as an isocyanate or isothiocyanate group being reacted with another isocyanate or isothiocyanate group. The reaction products nevertheless contain a plurality of one or more of the following groups:

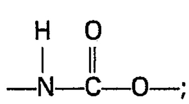;
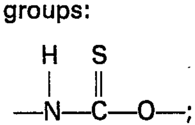;
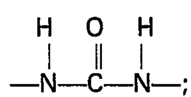;
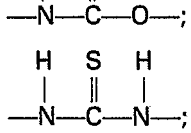;
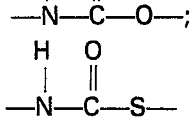
or
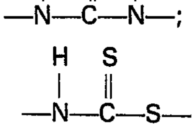

The term "thermal transition temperature" as employed herein is defined as a change in linear coefficient of thermal expansion as defined in *Macromolecules 1 Structure and Properties*, by Hans-Georg Elias, Plenum Press, 1977, Chapter 10.

The term flexural modulus factor as employed herein is defined as the flexural modulus value obtained at one temperature divided by the flexural modulus value obtained at a higher temperature, the particular temperatures being indicated in parenthesis following the term e.g. (—20°F/158°F) or (—29°C/70°C) means that the factor was obtained by dividing the flexural modulus value obtained at —20°F (—29°C) by that value obtained at 158°F (70°C).

The term active hydrogen compound as employed herein means a compound which has active hydrogen atoms which are reactive with isocyanate or isothiocyanate groups such as, for example,

$$-OH,\ -SH,\ -\underset{|}{N}H,\ -NH_2,$$

and combinations thereof, i.e. two or more different groups on a single molecule.

The solubility parameters of the various materials can be determined by the equation

$$\delta^2 = \frac{\Delta H - RT}{V_m}$$

where

$\delta$ is the solubility parameter,

$\Delta H$ is the latent heat of vaporization expressed as calories per mole at 25°C,

R is the gas constant

$$\left(1.987 \frac{\text{calories}}{°K \times \text{mole}}\right)$$

T is the temperature in °K and

$V_m$ is the molar volume in cubic centimeters.

The solubility parameters of various polymers are discussed by P. A. Small in "Some Factors Affecting The Solubility of Polymers" *J. Appl. Chem.*, Vol. 3, Feb. 1953, pp. 71—80; by Hans-Georg Elias in *Macromolecules 1 Structure and Properties*, Plenum Press, 1977, Chapter 6; and by R. F. Fedors in "A Method for Estimating Both Solubility Parameters and Molar Volumes of Liquids", *Polymer Engineering and Science*, Feb. 1974 Vol. 19, No. 2, pp 147—154.

Suitable active hydrogen compounds which can be employed in the present invention include, for example, polyether polyols, polyester polyols, phosphoric acid initiated polyols and amine initiated polyols, polythioethers, polyacetals, polycarbonates, polyester amides, polyamines containing primary and secondary amino groups, and mixtures thereof.

Suitable initiators which may be employed to prepare the polyether polyols include those compounds having 2 to 8 active hydrogen atoms such as, for example, water, ethylene glycol, propylene glycol, butane diol, hexane diol, glycerine, trimethylol propane, pentaerythritol, hexane triol, sorbitol, sucrose, hydroquinone, resorcinol, catechol, bisphenols, novolac resins, and mixtures thereof.

Suitable amine initiators which can be employed as a polyol or to prepare an amine initiated polyol include, for example, ammonia, ethylenediamine, 1,3-diaminopropane, 1,4-diaminobutane, 1,5-diaminopentane, 1,6-diaminohexane, diethylenetriamine, triethylenetetraamine, tetraethylenepentamine, pentaethylenehexamine, ethanolamine, aminoethylethanolamine, aniline, 2,4-toluenediamine, 2,6-toluenediamine, diaminodiphenyloxide (oxydianiline), 2,4′-diamino-diphenylmethane, 4,4′-diaminodiphenylmethane, 1,3-phenylenediamine, 1,4-phenylenediamine, naphthylene-1,5-diamine, triphenylmethane-4,4′,4″-triamine, 4,4′-di(methylamino)-diphenylmethane, 1-methyl-2-methylamino-4-aminobenzene, 1,3-diethyl-2,4-diaminobenzene, 2,4-diaminomesitylene, 1-methyl-3,5-diethyl-2,4-diaminobenzene, 1-methyl-3,5-diethyl-2,6-diaminobenzene, 1,3,5-triethyl-2,6-diaminobenzene, 3,5,3′,5-tetraethyl-4,4′-diaminodiphenylmethane and amine aldehyde condensation products such as the polyphenyl-polymethylene polyamines produced from aniline and formaldehyde, and mixtures thereof.

Suitable initiators or polyols also include thiols such as, for example, ethanedithiol, propanedithiol, butanedithiol, pentanedithiol, hexanedithiol, propanetrithiol, hexanetrithiol, and mixtures thereof.

Suitable alkylene oxides or vicinal epoxy compounds which may be reacted with the hydroxyl- or thio-containing, amine-containing compounds or phosphoric acid include, for example, ethylene oxide, 1,2-propylene oxide, 1,2-butylene oxide, 2,3-butylene oxide, styrene oxide, epichlorohydrin, epibromo-hydrin, epiiodohydrin, and mixtures thereof.

Suitable polyester polyols which may be employed herein include, for example, those prepared by reacting a polycarboxylic acid or anhydride thereof with a polyhydric alcohol. The polycarboxylic acids may be aliphatic, cycloaliphatic, aromatic and/or heterocyclic and may be substituted (e.g. with halogen atom) and/or unsaturated. Examples of carboxylic acids of this kind include succinic acid; adipic acid; suberic acid; azelaic acid; sebacic acid; phthalic acid, isophthalic acid; trimellitic acid; phthalic acid anhydride; tetrahydrophthalic acid anhydride; hexahydrophthalic acid anhydride; tetrachlorophthalic acid anhydride; endomethylene tetrahydrophthalic acid anhydride; glutaric acid anhydride; maleic acid; maleic acid anhydride; fumaric acid; dimeric and trimeric fatty acids; such as oleic acid, which may be in admixture with monomeric fatty acids, terephthalic acid dimethyl ester; terephthalic acid bisglycol ester and the like. Mixtures of such acids or anhydrides may also be employed.

Examples of suitable polyhydric alcohols include ethylene glycol, 1,2-propylene glycol; 1,3-propylene glycol; 1,4-, 1,2- and 2,3-butylene glycol; 1,6-hexane diol; 1,8-octane diol; neopentyl glycol; cyclohexane dimethanol (1,4-bis-hydroxymethyl cyclohexane) 2-methyl-1,3-propane diol; glycerol; trimethylol propane; 1,2,6-hexane triol; 1,2,4-butane triol; trimethylol ethane; pentaerythritol; quinitol; mannitol; sorbitol; methyl glycoside; diethylene glycol; triethylene glycol; tetraethylene glycol; polyethylene glycol; dipropylene glycol; polypropylene glycols; dibutylene glycol; and polybutylene glycols. The polyesters may contain some terminal carboxyl groups. It is also possible to use polyesters of lactones such as caprolactone, or hydroxy carboxylic acids such as hydroxy caproic acid.

Suitable polythioethers which can be employed include, for example, the condensation products of thiodiglycol alone or thiodiglycol with other glycols, dicarboxylic acids, formaldehyde, amino carboxylic acids or amino alcohols. The products can be characterized as polythio mixed ethers, polythioether esters or polythioether ester amides, depending upon the co-components used.

Examples of suitable polyacetals include the compounds obtained from formaldehyde and glycols, such as diethylene glycol, triethylene glycol, 1,1′-isopropylidene-bis-(p-phenyleneoxy)di-ethanol-2, and hexane diol. Polyacetals suitable for use in accordance with the invention can also be obtained by polymerizing cyclic acetals.

Suitable polycarbonates containing hydroxyl groups are those of the type which are generally known and which may be obtained by reacting diols, such as 1,3-propane diol, 1,4-butane diol, 1,6-hexane diol, diethylene glycol, triethylene glycol or tetraethylene glycol, with diaryl carbonates, for example diphenyl carbonate, or phosgene.

The polyester amides and polyamides suitable for use herein include the predominantly linear condensates obtained from polyvalent saturated and unsaturated carboxylic acids or their anhydrides and polyvalent saturated and unsaturated amino alcohols, diamines, polyamines and mixtures thereof.

Polyhydroxyl compounds already containing urethane or urea groups and modified natural polyols, such as castor oil, carbohydrates or starch, may also be used. Addition products of alkylene oxides with phenolformaldehyde resins or even with urea-formaldehyde resins may also be used in accordance with the invention.

Examples of the many and varied types of active hydrogen compounds suitable for use in accordance with the invention are described, for example, in High Polymers, Vol. XVI, "Polyurethanes, Chemistry and Technology" by Sanders-Frisch, Interscience Publishers, New York, London, Vol. I, 1962, pages 32 to 42 and pages 44 to 54, and Vol. II, 1964, pages 5 to 6 and 198 to 199.

Other polyols which can be employed herein, include, polymer-containing polyols such as, for example, those disclosed in U.S. Patents RE 29,118, RE 28,715, RE 29,014, and 3,869,413.

Also suitable as active hydrogen compounds are aminated polyglycols such as, for example, those described in U.S. Patents 3,236,895; 3,666,788; 3,838,076; 3,847,992 and 4,070,530; polyalkylenepolyamines such as, for example, diethylenetriamine and aromatic polyamines such as, for example, methylenedianiline.

A first active hydrogen compound advantageously has an average active hydrogen equivalent weight of from 50 to 4,000, preferably from 70 to 3,000, most preferably from 85 to 2,500; and advantageously has an average active hydrogen functionality from 2 to 8, preferably from 2 to 4. A second active hydrogen compound advantageously has an average active hydrogen equivalent weight of from 50 to 4,000, preferably from 65 to 1,000, most preferably from 65 to 500, and advantageously has an average hydrogen functionality of from 2 to 8, preferably from 3 to 4. A third active hydrogen compound advantageously has an average active hydrogen equivalent weight of from 20 to 4,000, preferably from 30 to 120, most preferably from 50 to 100, and advantageously has an average active hydrogen functionality of from 2 to 6, preferably from 2 to 4, most preferably from 2 to 3.

Suitable organic aromatic polyisocyanates which can be employed herein include, for example, any such polyisocyanate having 2 or more isocyanate groups per molecule such as, for example, 2,4-toluenediisocyanate, 2,6-toluenediisocyanate, p,p′-diphenylmethanediisocyanate, p-phenylenediisocyanate, naphthalenediisocyanate, polymethylene polyphenylisocyanates, and mixtures thereof.

Also suitable are organic aromatic polyisocyanates and the prepolymers prepared from such polyisocyanates and compounds having 2 or more active hydrogen atoms.

Suitable organic aliphatic polyisocyanates include, in addition to the hydrogenated derivatives of the above mentioned organic aromatic polyisocyanates, 1,6-hexamethylene diisocyanate, 1,4-cyclohexyl diisocyanate, 1,4-bis-isocyanatomethyl-cyclohexane, and mixtures thereof.

Also suitable are the corresponding polyisothiocyanates.

The isocyanate- and/or isothiocyanate-to-active hydrogen equivalent ratio is suitably from 0.75:1 to 1.5:1, advantageously from 0.75:1 to 1.25:1, preferably from 0.95:1 to 1.25:1, and most preferably from 1.01:1 to 1.10:1.

The polyurethanes can be prepared either in the presence or absence of a catalyst. Those polyurethanes prepared from amine containing polyols or polyamines do not usually require a catalyst although catalysts can be employed if desired. On the other hand, those polyurethanes prepared from polyols which do not contain nitrogen atoms are preferably prepared in the presence of a catalyst.

Suitable catalysts which may be employed herein include, for example, organo-metal compounds, tertiary amines, alkali metal alkoxides, and mixtures thereof.

Suitable organo-metal catalysts include, for example, organo-metal compounds of tin, zinc, lead, mercury, cadmium, bismuth, antimony, iron, manganese, cobalt, copper, vanadium and the like such as, for example, metal salts of a carboxylic acid having from about 2 to about 20 carbon atoms including, for example, stannous octoate, dibutyltin dilaurate, dibutyltin diacetate, ferric acetyl acetonate, lead octoate, lead oleate, phenylmercuric propionate, lead naphthenate, manganese naphthenate, copper naphthenate, vanadryl naphthenate, cobalt octoate, cobalt acetate, copper oleate, vanadium pentoxide, and mixtures thereof.

Suitable amine catalysts include, for example, triethylenediamine, triethylamine, tetramethylbutanediamine, N,N-dimethylethanolamine, N-ethylmorpholine, bis-(2-dimethylaminoethyl)ether, N-methylmorpholine, N-ethylpiperidine, 1,3-bis-(dimethylamino)-2-propanol, N,N,N',N'-tetramethylethylenediamine, and mixtures thereof.

Suitable alkali metal alkoxides which can be employed as catalysts for urethane formation include, for example, sodium ethoxide, potassium ethoxide, sodium propoxide, potassium propoxide, sodium butoxide, potassium butoxide, lithium ethoxide, lithium propoxide, lithium butoxide, alkali metal salts of polyols such as described in U.S.P. 3,728,308, and mixtures thereof.

Preferably, these urethane catalysts are in liquid form, but if they are inherently a solid at the application temperature, then they may be dissolved in an appropriate liquid, such as, for example, dipropylene glycol.

The catalysts, when employed, can be employed in quantities of from about 0.001 to about 5, preferably from about 0.01 to about 1 part per 100 parts of total active hydrogen compound employed depending upon the activity of the catalyst. Very weak catalysts could possibly be employed in quantities above 5 parts per 100 parts of polyol.

If desired, the densities of the polyurethanes produced herein can be reduced by incorporating a blowing agent into the formulation. Suitable such blowing agents are fully described in U.S. 4,125,487 and in U.S. 3,753,933. Particularly suitable blowing agents include the low boiling halogenated hydrocarbons such as methylene chloride and trichloromonofluoromethane.

Another suitable method for reducing the density is by frothing by injecting an inert gas into the mixture of urethane forming components. Suitable such inert gases include, for example, nitrogen, oxygen, carbon dioxide, xenon, helium, and mixtures thereof such as air.

If desired, cell control agents can be employed, particularly when preparing foams or products of reduced density and/or to assist in paintability of the polyurethane. Suitable cell control agents which can be employed herein include silicone oils such as, for example, DC—193, DC—195, DC—197 and DC—198 commercially available from Dow Corning Corp.; SF—1034, PFA—1635, PFA—1700 and PFA—1660 commercially available from General Electric Co.; and L—520 and L—5320 commercially available from Union Carbide Corp., and mixtures thereof.

The polyurethanes of the present invention may additionally contain, if desired, coloring agents, mold release agents, fire retardant agents, fillers, and modifiers.

Suitable liquid and solid modifiers are disclosed and described in U.S. Patent 3,773,697. However, any such modifier described therein which fulfills the definition of any of the active hydrogen compounds as described in this application are not considered as modifiers but rather as one of the active hydrogen compounds.

Particularly suitable as the modifier or filler substances are fiberglass reinforcement fibers, particularly those having lengths of from about 1/16 inch (0.16 cm) to about 1/2 inch (1.27 cm). Another particularly suitable filler is mica.

The components which react to form the polyurethanes of the present invention can be shaped or formed into useful articles by pouring or injecting the reactive mixture into molds which are capable of withstanding the exotherm of the polymerizing mass and are non-reactive with and are insoluble when in contact with the liquid reactive mixture. Particularly suitable molds are those made of metal such as aluminum, copper, brass, and steel. In some instances non-metal molds can be employed such as those made of, for example, polyethylene, polypropylene, polyethylene terephthalate, and silicone elastomers.

To prevent the solidifying mass from adhering to the mold surface, it may be necessary to precoat the mold surface with a film of a suitable mold release agent such as, for example, hydrocarbon wax or a polysiloxane preparation or a polytetrafluoroethylene coating, or employ an internal mold release agent in the composition.

When pouring a relatively rapid-setting blend into massive metal molds, it may be necessary for

rapid demolding to preheat the molds to an appropriate temperature so that the mold will not abstract the heat of polymerization from the reactive mass and inappropriately delay the solidification time expected of a given formulation. On the other hand, thin wall metal molds could exhibit a minimal "heat sink" effect on relatively large cross section castings and thus, these thin wall metal molds may not require preheating.

The following examples are illustrative of the present invention and are not to be construed as to limiting the scope thereof in any manner.

Examples 1 to 10 and comparative run A

Following is a list of materials employed in the examples and comparative run.

Active Hydrogen Compound A is the reaction product of glycerine and propylene oxide at a molar ratio of 1 to 6 respectively and having an equivalent weight of 150.

Active Hydrogen Compound B is the reaction product of Active Hydrogen Compound A with a mixture of 92% propylene oxide and 8% by weight of ethylene oxide having the properties given in Table I.

Active Hydrogen Compound C is the reaction product of Active Hydrogen Compound A with propylene oxide and subsequently end-capped with ethylene oxide. The ethylene oxide content is 10% by weight of the total amount of oxide added. The properties are given in Table I.

Active Hydrogen Compound D is the reaction product of Active Hydrogen Compound A with propylene oxide and subsequently end-capped with ethylene oxide. The amount of ethylene oxide is 17% by weight of the total amount of oxide added. The properties are given in Table I.

Active Hydrogen Compound E is the reaction product of aminoethylethanolamine with propylene oxide at a molar ratio of 1 to 3 respectively. The properties are given in Table I.

Active Hydrogen Compound F is the reaction product of glycerine with propylene oxide at a molar ratio of one to three respectively. The properties are given in Table I.

Active Hydrogen Compound G is a polyoxypropylene glycol. The properties are given in Table I.

Active Hydrogen Compound H is diethylene glycol. The properties are given in Table I.

Active Hydrogen Compound I is triethylene glycol. The properties are given in Table I.

Active Hydrogen Compound J is tetraethylene glycol. The properties are given in Table I.

Active Hydrogen Compound K is a polyoxypropylene glycol end-capped with $NH_2$ groups. This polyol is commercially available from Jefferson Chemical Co. as D—2000. The properties are given in Table I. The manufacturer reports the equivalent weight to be 1,000 based upon the primary amine hydrogens.

Polyisocyanate A is a mixture of 2,4-/2,6-toluene diisocyanate at a respective ratio of 80%/20% by weight.

Polyisocyanate B is a prepolymer prepared by reacting Polyisocyanate A with Polyol F at a molar ratio of 6.7 to 1 respectively. The prepolymer contains 30.1% NCO groups by weight and has an isocyanate equivalent weight of 141.

Polyisocyanate C is a polymethylene polyphenylisocyanate having an average functionality of 2.7 and an isocyanate equivalent weight of 135 commercially available from The Upjohn Company as PAPI 135.

Polyisocyanate D is modified diphenylmethane diisocyanate containing a high percentage of pure diphenylmethane diisocyanate, a lesser amount of polycarbodiimide adducts, and an isocyanate equivalent weight of 144 commercially available from The Upjohn Company as Isonate 143L.

Polyisocyanate E is a liquid aliphatic diisocyanate believed to be 4,4'-diisocyanatodicyclohexyl methane containing 31.8% NCO by weight, and having an isocyanate equivalent weight of 132, commercially available from E. I. duPont deNemours and Company as Hylene® W.

Filler A is 1/16" (0.16 cm) milled glass fibers commercially available from Owens Corning Fiberglass Corporation as P117B—1/16" milled glass fibers.

Modifier A is a non-reactive, halogen containing organic phosphate ester commercially available from Monsanto Company as Phosgard C—22—R.

Catalyst A is an organo-tin sulfide commercially available from Witco Chemical Corp. as Fomrez UL—6.

Catalyst B is stannous octoate commercially available from M & T Chemicals, Inc. as T—9.

TABLE I

| Active hydrogen compound | Equivalent weight | Functionality | Solubility parameter by small | Reactivity by gel test seconds |
|---|---|---|---|---|
| B | 1000 | 3 | 9.0 | 210 |
| C | 1000 | 3 | 9.9 | 135 |
| D | 2428 | 3 | 8.9 | 170 |
| E | 69 | 4 | 12.3 | 5 |
| F | 86 | 3 | 8.9 | 54 |
| G | 1000 | 2 | 7.8 | 210 |
| H | 53 | 2 | 14.24 | 34 |
| I | 75 | 2 | 12.81 | 32 |
| J | 97 | 2 | 11.81 | 32 |
| K | 500 | 4 | 8.25 | 0.5 |

The relative reactivities for active hydrogen Compounds B through K were determined by mixing the active hydrogen compound in a quantity so as to provide an isocyanate-to-active hydrogen ratio of 1:1 with 67.5 grams of Polyisocyanate C in the presence of 0.25 cc of Catalyst B. The time from mixing until a gel is formed was measured. The shorter the gel time the greater the reactivity. The gel times are given in Table I.

The rate of reactivity of the active hydrogen compounds with isocyanate may also be determined using an infrared spectrophotometer by following the disappearance of the isocyanate and/or the appearance of the carbonyl band as a function of time. A relative ranking of polyols from data obtained by this technique corresponds closely with the relative ranking using gel times.

Polyurethane compositions were prepared in Examples 1 to 10 and comparative Run A employing one of the following three procedures:

Procedure A

The polyol components were degassed at room temperature under vacuum. The components were then added to a suitable mixing vessel in any order except that when a catalyst and/or an amine initiated or an amine containing an active hydrogen was employed, then they were added last. All of the components were added at room temperature. After hand mixing the components, the resultant mixture was poured into a mold preheated to between 80° to 100°C formed by placing 0.125 inch (0.32 cm) spacers between aluminum sheets such that the molded sheet produced therefrom was either 6"x12"x0.125" (15.24 cmx30.48 cmx0.32 cm) or 12"x18"x0.125" (30.48 cmx45.72 cmx0.32 cm). The mold cavity had been coated with a mold release agent. The thus formed sheets were then demolded within less than 5 minutes and post cured at 250°F (121°C) for 30 minutes prior to cutting the sheets into specimens for testing.

Procedure B

This procedure employed a reaction injection molding machine with a high pressure impingement mixing head. Two streams were fed to the mixing head at controlled rates so as to provide the desired NCO: active hydrogen ratio. One stream contained the polyisocyanate preheated to a temperature between 70°F (21°C) and 110°F (43°C). The other stream contained all of the other components and was preheated to a temperature between 80°F (27°C) and 130°F (54°C). The resultant mixture was injected into a P—20 tool steel mold the lower half of which was 20"x12"x0.125" (50.8 cmx30.48 cmx0.32 cm), the upper half of which was 20"x12"x0.250" (50.8 cmx30.48 cmx0.64 cm) and a section at the top of which was 4"x8"x0.5" (10.16 cmx20.32 cmx1.27 cm). The mold was coated with a mold release agent and preheated to a temperature between 100°F (38°C) and 220°F (104°C). The molded sheet was removed from the mold within 5 minutes after mixing and was post cured at 250°F (121°C) for 60 min. prior to cutting into specimens for testing.

Procedure C

The same procedure as B was employed with the following exceptions.

1. Fiberglass or mica fillers were employed and were included in both streams.

2. The fillers were dried at 250°F (121°C) overnight prior to mixing with the contents of the reservoirs for the two streams.

3. The molded article had an approximate thickness of 0.125 inches (0.32 cm).

4. The mold was steel and was preheated to a temperature between 125°F (52°C) and 165°F (74°C).

In these examples and comparative experiments, the properties were determined by the following methods.

Thermal transitions were obtained employing a DuPont 990 thermal analyzer with a DuPont 943 thermomechanical analyzer (TMA) operated under a nitrogen atmosphere at a flow rate of 40 cc/min., a

temperature scale of 20°C per inch (2,54 cm) of chart, a program rate in the heating mode at 20°C per minute at a shift setting of plus 5 inches (12.70 cm).

The TMA axis was set at a scale of 0.5 inch (1,27 cm) per inch (2,54 cm) of chart employing the expansion mode set at zero load and the dY(10x) in [mils/min.] [0,05625°/min] per inch (2,54 cm) set at 2. The number of thermal transitions between −100°C and 180°C or the decomposition temperature of polyurethane, whichever occurred first, was recorded.

Flexural modulus values were determined by employing ASTM method D—790—66 using 1/2"x1/8"x5" (1.27 cmx0.32 cmx12.7 cm) samples with a 2" (5.08 cm) span and a crosshead speed of 0.5 in/min. (1.27 cm/min.). The number presented is an average of 3 samples instead of 5 samples. For Example 10, the sample size was 1"x1/8"x5" (2.54 cmx0.32 cmx12.7 cm).

The formulations and properties of various polyurethanes are given in Table II.

In Table II under the formulations section, the abbreviation pbw stands for parts by weight. The equivalents given for the active hydrogen compounds are calculated from the pbw values as grams and the gram equivalent weights of the compounds. The equivalents are calculated for the purpose of calculating the isocyanate-to-active hydrogen equivalent ratio.

The quantity of catalyst added to a formulation is expressed as a percent by weight based upon the combined weights of the three active hydrogen compounds. The quantities of filler or modifier are expressed as percent by weight based upon the total weight of the formulation including the filler or modifier. The formulation of Example 4 additionally contained 5.5 percent by weight of trichloromonofluoromethane blowing agent and 1.25 percent by weight of a silicone cell control agent based on the combined weights of the three polyols.

TABLE II

| Formulations/examples and comparative run | 1 | 2 | 3 |
|---|---|---|---|
| First Active Hydrogen Compound, Type/pbw/eq. | B/50/0.05 | B/50/0.05 | B/50/0.05 |
| Second Active Hydrogen Compound, Type/pbw/eq. | E/69/1.0 | E/69/1.0 | E/69/1.0 |
| Third Active Hydrogen Compound, Type/pbw/eq. | I/41.25/0.55 | I/41.25/0.55 | I/41.25/0.55 |
| Polyisocyanate, Type/pbw/eq. | D/173/1.20 | D/196/1.36 | D/242/1.68 |
| NCO: Active Hydrogen Ratio | 0.75:1 | 0.85:1 | 1.05:1 |
| Added Catalyst, Type/% | None | None | A/0.2 |
| Filler, Type/% | None | None | None |
| Modifier, Type/% | None | None | None |
| Mixing Procedure | A | B | B |
| Properties of product | | | |
| No. of Temperature Transitions | 4 | 3 | 3 |
| Flexural Modulus | | | |
| −20°F, psix$10^{-5}$ (−29°C,Pa) | 3.80 (0,255) | 3.93 (0,275) | 3.9 (0,265) |
| 158°F, psix$10^{-5}$ (70°C,Pa) | 1.52 (0,069) | 2.42 (0,167) | 2.01 (0,137) |
| Factor | 2.5 | 1.62 | 1.94 |

| Formulations/Examples and comparative run | 4 | 5 | 6 |
|---|---|---|---|
| First Active Hydrogen Compound, Type/pbw/eq. | B/50/0.05 | B/50/0.05 | B/50/0.05 |
| Second Active Hydrogen Compound, Type/pbw/eq. | E/69/1.0 | E/69/1.0 | E/103.5/1.5 |
| Third Active Hydrogen Compound, Type/pbw/eq. | I/41.25/0.55 | I/41.25/0.55 | H/29.15/0.55 |
| Polyisocyanate, Type/pbw/eq. | D/242/1.68 | D/242/1.68 | B/237/1.68 |
| NCO: Active Hydrogen Ratio | 1.05:1 | 1.05:1 | 0.8:1 |
| Added Catalyst, Type/% | A/0.2 | None | None |
| Filler, Type/% | None | A/18 | None |
| Modifier, Type/% | None | None | None |
| Mixing Procedure | B | C | B |
| Properties of product | | | |
| No. of Temperature transitions | 3 | 3 | 3 |
| Flexural Modulus | | | |
| −20°F, psix$10^{-5}$ (−29°C,Pa) | 3.26 (0,225) | 6,29 (0,432) | 5.77 (0,402) |
| 158°F, psix$10^{-5}$ (70°C,Pa) | 1.58 (0,108) | 4.21 (0,294) | 3.43 (0,235) |
| Factor | 2.06 | 1.49 | 1.68 |

TABLE II (contd.)

| Formulations/examples and comparative run | 7 | 8 | 9 |
|---|---|---|---|
| First Active Hydrogen Compound, Type/pbw/eq. | B/50/0.05 | G/50/0.05 | H/29.15/0.55 |
| Second Active Hydrogen Compound, Type/pbw/eq. | E/103.5/1.5 | H/29.15/0.55 | K/25/0.05 |
| Third Active Hydrogen Compound, Type/pbw/eq. | H/29.15/0.55 | F/88.7/1.03 | E/86.25/1.25 |
| Polyisocyanate, Type/pbw/eq. | C/298/2.2 | D/240/1.67 | D/278/1.93 |
| NCO: Active Hydrogen Ratio | 1.05:1 | 1.02:1 | 1.04:1 |
| Added Catalyst, Type/% | None | D/0.5 | None |
| Filler, Type/% | None | None | None |
| Modifier, Type/% | A/25 | None | None |
| Mixing Procedure | B | A | A |
| Properties of product | | | |
| No. of Temperature Transitions | 3 | 3 | 3 |
| Flexural Modulus | | | |
| −20°F, psi×$10^{-5}$ (−29°C,Pa) | 6 (0,412) | 4.1 (0,284) | 4.24 (0,294) |
| 158°F, psi×$10^{-5}$ (70°C,Pa) | 2.27 (0,157) | 1.6 (0,108) | 2.55 (0,177) |
| Factor | 2.64 | 2.56 | 1.66 |

| Formulations/examples and comparative run | 10 | Comp. run A |
|---|---|---|
| First Active Hydrogen Compound, Type/pbw/eq. | D/121.4/0.05 | C/50/0.05 |
| Second Active Hydrogen Compound, Type/pbw/eq. | E/69/1.0 | E/13.8/0.2 |
| Third Active Hydrogen Compound, Type/pbw/eq. | J/48.5/0.5 | J/38.8/0.4 |
| Polyisocyanate, Type/pbw/eq. | E/232/1.76 | D/97.6/0.68 |
| NCO: Active Hydrogen Ratio | 1.14:1 | 1.05:1 |
| Added Catalyst, Type/% | None | None |
| Filler, Type/% | None | None |
| Modifier, Type/% | None | None |
| Mixing Procedure | A | A |
| Properties of product | | |
| No. of Temperature Transitions | 3 | 2 |
| Flexural Modulus | | |
| −20°F, psi×$10^{-5}$ (−29°C,Pa) | 1.41 (0,098) | 2.4 (0,167) |
| 158°F, psi×$10^{-5}$ (70°C,Pa) | 0.58 (0,402) | 0.23 (0,0157) |
| Factor | 2.43 | 10.44 |

Comparative Run A demonstrates that a polyurethane composition having a flexural modulus factor greater than 3.4 and having less than three thermal transitions was made when the formulation contained more equivalents of Active Hydrogen Compound J than equivalents of Active Hydrogen Compound E and the difference between the solubility parameters of Active Hydrogen Compounds E and J is 0.49. In Example 8, the formulation contains more equivalents of Active Hydrogen Compound F than of Active Hydrogen Compound H, but the smallest difference in the solubility parameters of any two of the active hydrogen compounds is 1.2. In Example 10, the smallest difference in the solubility parameters between any two of the active hydrogen compounds is 0.49, but the formulation contains more equivalents of Active Hydrogen Compound E than of Active Hydrogen Compound J.

The differences in reactivity are relative only to the three active hydrogen compounds in the formulation. Active hydrogen compounds have a reactivity.

The ranking of the relative reactivities of any active hydrogen compound is important primarily within the three active hydrogen compounds in a formulation. For example, note that Active Hydrogen Compound H has a relative reactivity of 34 seconds. In Example 9, Active Hydrogen Compound H is the slowest in reactivity. In Example 8, Compound H is the fastest in reactivity of the three active hydrogen compounds. In Examples 6 and 7, Compound H has a reactivity intermediate between Compounds E and B.

## Claims

1. A process for the preparation of a polyurethane by admixing and reacting three active hydrogen compounds with an organic polyisocyanate or polyisothiocyanate characterized in that one of the active hydrogen compounds has a reactivity with a polyisocyanate greater than the reactivity of either of the other two active hydrogen compounds, the solubility parameter of each active hydrogen compound being different from each other by a value greater than 0.49 when the number of active hydrogen equivalents of the second most reactive active hydrogen compound is greater than the number of active hydrogen equivalents of the most reactive active hydrogen compound.

2. The process of Claim 1 characterized in that the reactivity of one active hydrogen compound is greater than the reactivity of a second active hydrogen compound and the reactivity of the second active hydrogen compound is greater than the reactivity of the third active hydrogen compound.

## Revendications

1. Procédé pour la préparation d'un polyuréthane en mélangeant et en faisant réagir trois composés à hydrogène actif avec un polyisocyanate ou un polyisothiocyanate organique, caractérisé par le fait que l'un des composés à hydrogène actif a une réactivité avec le polyisocyanate supérieure à la réactivité de chacun des deux autres composés à hydrogène actif, les paramètres de solubilité de chaque composé à hydrogène actif étant différents l'un de l'autre d'une valeur supérieure à 0,49 quand le nombre d'équivalents hydrogène actif du second composé le plus réactif à l'hydrogène est supérieur au nombre d'équivalents hydrogène actif du composé le plus réactif à hydrogène actif.

2. Procédé selon la revendication 1, caractérisé par le fait que la réactivité d'un composé à hydrogène actif est supérieure à la réactivité d'un second composé à hydrogène actif et que la réactivité du second composé à hydrogène actif est supérieure à la réactivité du troisième composé à hydrogène actif.

## Patentansprüche

1. Verfahren zur Herstellung von Polyurethan durch Vermischen und Umsetzen von drei aktiven Wasserstoff enthaltenden Verbindungen mit einem organischen Polyisocyanat oder Polyisothiocyanat, dadurch gekennzeichnet, daß eine der aktiven Wasserstoff enthaltenden Verbindungen mit einem Polyisocyanat eine Reaktivität besitzt, die größer ist als die Reaktivität jeder der zwei anderen aktiven Wasserstoff enthaltenden Verbindungen, und der Löslichkeitsparameter jeder aktiven Wasserstoff enthaltenden Verbindung von jeder anderen um einen Wert größer als 0,49 verschieden ist, wenn die Zahl der Aktivwasserstoff-Äquivalente der zweitreaktivsten Verbindung mit aktivem Wasserstoff größer ist als die Zahl der Aktivwasserstoff-Äquivalente der reaktivsten Verbindung mit aktivem Wasserstoff.

2. Verfahren nach Anspruch 1, dadurch gekennzeichnet, daß die Reaktivität einer Verbindung mit aktivem Wasserstoff größer ist als die Reaktivität einer zweiten Verbindung mit aktivem Wasserstoff und die Reaktivität der zweiten Verbindung mit aktivem Wasserstoff größer ist als die Reaktivität der dritten Verbindung mit aktivem Wasserstoff.